(19) Europäisches Patentamt
European Patent Office
Office européen des brevets

(11) Publication number: **0 030 414**
**B1**

(12) **EUROPEAN PATENT SPECIFICATION**

(45) Date of publication of patent specification: **27.06.84**

(51) Int. Cl.³: **C 08 L 67/02**, C 08 L 25/00

(21) Application number: **80303899.1**

(22) Date of filing: **31.10.80**

(54) **Thermoplastic polymer compositions and shaped articles formed therefrom.**

(30) Priority: **01.11.79 US 90178**
**01.11.79 US 90179**

(43) Date of publication of application:
**17.06.81 Bulletin 81/24**

(45) Publication of the grant of the patent:
**27.06.84 Bulletin 84/26**

(84) Designated Contracting States:
**BE DE FR GB IT NL**

(56) References cited:
**DE - A - 2 348 377**
**FR - A - 2 128 461**
**US - A - 4 126 602**

**CHEMICAL ABSTRACTS, vol. 79, no. 20, November 19, 1973, page 16, abstract, 116104x Columbus, Ohio, USA**
**CHEMICAL ABSTRACTS, vol. 81, no. 16, October 21, 1974, page 40, abstract 92486m Columbus, Ohio, USA**
**CHEMICAL ABSTRACTS, vol. 89, no. 14, October 2, 1978, Page 74, abstract 111329w Columbus, Ohio, USA**

(73) Proprietor: **OCCIDENTAL CHEMICAL CORPORATION**
**P.O. Box 189**
**Niagara Falls New York 14302 (US)**

(72) Inventor: **Salee, Gideon**
**92 The Paddock**
**Williamsville New York 14221 (US)**

(74) Representative: **Myerscough, Philip Boyd et al,**
**J.A.Kemp & Co. 14, South Square Gray's Inn**
**London, WC1R 5EU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 030 414 B1

Courier Press, Leamington Spa, England.

**Description**

This invention relates to blends of an MBS polymer or a SAN polymer and a linear aromatic carboxylic polyester of monomer components consisting essentially of a bisphenol and a dicarboxylic acid wherein the dicarboxylic acid can be an aromatic dicarboxylic acid or an aliphatic saturated dicarboxylic acid such as oxalic or adipic acids.

Linear aromatic polyesters prepared from aromatic dicarboxylic acids and bisphenols are well known for their suitability for molding, extrusion, casting, and film-forming applications. For example, US Patent 3,216,970 to Conix, discloses linear aromatic polyesters prepared from isophthalic acid, terephthalic acid, and a bisphenolic compound. Such high molecular weight compositions are known to be useful in the preparation of various films and fibers. Further, these compositions, when molded into useful articles using conventional techniques, provide properties superior to articles molded from other linear polyester compositions. For instance, aromatic polyesters are known to have a variety of useful properties, such as good tensile, impact, and bending strengths, high thermal deformation and thermal decomposition temperatures, resistance to UV irradiation and good electrical properties.

In order to form a successful molding resin on a commercial scale, a polymer should be capable of being molded conveniently without significant degradation in physical properties. In this respect, although the aforementioned aromatic polyesters generally display excellent physical and chemical properties, a persistent and troublesome problem has been their sensitivity to hydrolytic degradation at elevated temperatures. This is demonstrated by the loss of tensile strength which can occur when an aromatic polyester resin is molded and subsequently immersed in boiling water. This tendency may be explained, in part, by the hydrolysis of the ester linkages under these conditions. In any event, it is to be appreciated that sensitivity to moisture represents a significant problem in aromatic polyester resins that would significantly limit their commercial utility in applications such as in autoclaves or at elevated temperatures in humid atmospheres.

US Patent 4126602 describes aromatic polyester compositions having improved hydrolytic stability comprising a linear aromatic polyester and a polymer comprising the reaction product of a styrene/maleic anhydride copolymer and a diene rubber.

The present invention provides thermoplastic polyester compositions having improved hydrolytic stability which comprise a mixture of (a) a linear aromatic polyester prepared from bisphenol and dicarboxylic acid monomer components and (b) an MBS polymer additive, i.e. a polymer prepared from methyl methacrylate, 1,3,-butadiene and styrene monomer components, or a SAN polymer additive, i.e. a polymer prepared from styrene or alpha-alkyl styrene and acrylonitrile or alpha-alkyl-acrylonitrile monomer components. The aromatic polyesters preferred for use in the compositions of this invention are prepared from a bisphenol component and at least one aromatic dicarboxylic acid component, most preferably isophthalic acid and/or terephthalic acid.

The linear aromatic polyesters can conveniently be prepared by condensing a diacid halide, e.g. a diacid bromide or especially a diacid chloride of a dicarboxylic acid, dissolved in an organic liquid which is a solvent for the polyester to be formed, with a metal phenolate of a bisphenol, dissolved in a liquid which is immiscible with the solvent for the diacid halide.

This interfacial polymerization process is more fully described in US Patent 3,216,970, to Conix. The foregoing interfacial polymerization method is a modification of the solution polyesterification process which can also be employed in the preparation of suitable aromatic polyesters from the aforementioned diacid halide and the bisphenol. Such solution preparatory procedures are disclosed in P. W. Morgan "Condensation Polymers by Interfacial and Solution Methods", Interscience Publishers, 1965, Chapter VIII, particularly pages 332—364.

The bisphenols which can be used in this process are known in the art and correspond to the general formula:

$$\mathrm{HO{-}\underset{\underset{T_b}{|}}{Ar}{-}\underset{\underset{G_m}{|}}{(E)_x}{-}\underset{\underset{T'_b}{|}}{Ar}{-}OH}$$

wherein Ar is aromatic, preferably containing 6—18 carbon atoms (including phenyl, biphenyl and naphthyl) G is alkyl, haloalkyl, aryl, haloaryl, alkylaryl, haloalkylaryl, arylalkyl, haloarylalkyl, cycloalkyl, or halocycloalkyl; E is a divalent (or di-substituted) alkylene, haloalkylene, cycloalkylene, halocycloalkylene, arylene, or haloarylene, —O—, —S—, —SO—, —$SO_2$—, —$SO_3$—, —CO—,

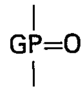 or 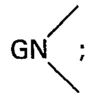 ;

T and T′ are independently selected from the group consisting of halogen, such as chlorine or bromine, G and OG; m is O or an integer from 1 to the number of replaceable hydrogen atoms on E; b is O or an integer from 1 to the number of replaceable hydrogen atoms on Ar, and x is 0 or 1. When there is

plurality of G substituents in the bisphenols, such substituents may be the same or different. The T and T′ substituents may occur in the ortho, meta or para-positions with respect to the hydroxyl radical. The foregoing hydrocarbon radicals preferably have carbon atoms as follows: alkyl, haloalkyl, alkylene and haloalkylene of 1 to 14 carbons; aryl, haloaryl, arylene and haloarylene of 6 to 14 carbons; alkylaryl, haloalkylaryl, arylalkyl and haloarylalkyl of 7 to 14 carbons; and cycloalkyl, halocycloalkyl, cycloalkylene and halocycloalkylene of 4 to 14 carbons. Additionally, mixtures of the above described bisphenols may be employed to obtain a polymer with especially desired properties. The bisphenols generally contain 12 to 30 carbon atoms, and preferably 12 to 25 carbon atoms.

Typical examples of bisphenols having the foregoing formula include bisphenol-A; i.e. bis(4-hydroxyphenyl)-2,2-propane, bis(3-hydroxy-phenyl)-1,2-ethane, bis(4-hydroxyphenyl)-1,2-ethane as well as the other bisphenols illustrated in G. Salee, US Patent 4,126,602 (issued November 21, 1978) at column 2, line 68—column 3, line 47. Representative bisphenols include p,p′-biphenol, and the other biphenols illustrated in the aforementioned US Patent 4,126,602, at column 3, lines 47—55. Mixtures of isomers of the foregoing bisphenols and biphenols can be used. Preferably, the bisphenol component, i.e. the bisphenol monomer residue, of the present polyester is derived from bisphenol-A.

The dicarboxylic acids which are useful in this process are also well known and can be represented by the formula:

$$HX{-}\overset{\displaystyle O}{\overset{\|}{C}}{-}(Z)_n{-}\overset{\displaystyle O}{\overset{\|}{C}}{-}XH$$

in which X is oxygen or sulfur, Z is alkylene, —Ar— or —Ar—Y—Ar— where Ar has the same definition as given with respect to the bisphenol, Y is an alkylene of 1 to 10 carbons, haloalkylene, —O—, —S—, —SO—, —$SO_2$—, —$SO_3$—, —CO—,

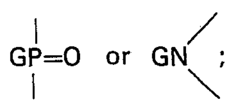
or ;

and n is 0 or 1.

Suitable dicarboxylic acids include aromatic dicarboxylic acids such as isophthalic acid and terephthalic acid, as well as the other aromatic dicarboxylic acids illustrated in the aforementioned US Patent 4,126,602 at column 4, lines 5—17.

Suitable aliphatic acids include oxalic acid, malonic acid, dithiomethonic acid and the other aliphatic dicarboxylic acids illustrated in the aforementioned US Patent 4,126,602 at column 4, lines 17—19. Aromatic acids are preferred. Of the aromatic dicarboxylic acids, isophthalic acid and terephthalic acid are especially preferred due to their availability and low cost. Most preferably, the dicarboxylic acid component comprises a mixture of 75 to 100 mol percent isophthalic acid and 25 to 0 mol percent terephthalic acid.

When the dicarboxylic acids used in preparing a polyester of the invention consist of both isophthalic and terephthalic acids in accordance with an especially preferred embodiment of the invention, a weight proportion of isophthalic to terephthalic acid residues in the polyester ranging from 75:25 to 90:10 provides an especially satisfactory result.

The polyester component of the invention are preferably prepared by a transesterification polymerization which is generally carried out in the melt, i.e. without use of a reaction diluent. Such transesterification polymerization reactions involve an ester interchange reaction between (1) a di-lower alkanoyl ester of the bisphenol (for example a diester of a bisphenol and a lower, i.e. $C_1$—$C_6$ alkanoic acid such as acetic acid) and the dicarboxylic acid; (2) said di-lower alkanoyl ester of the bisphenol and a di-lower alkyl ester of the dicarboxylic acid, e.g. a dimethyl ester of said dicarboxylic acid; and (3) the bisphenol and a diaryl ester of the dicarboxylic acid wherein said ester is the diester of the dicarboxylic acid and a monohydroxy aromatic compound of the benzene or naphthalene series of 6—20 carbon atoms such as phenol (as described in EPC Application No. 80301865.4 filed 4th June, 1980. The aforementioned transesterification reaction routes for preparation of the present polyester are more particularly described in T. Maruyama et al., US Patent 4,075,173, issued February 21, 1978.

It is especially preferred to employ in the invention, polyesters prepared by transesterification reaction of the bisphenol and a diaryl ester of the dicarboxylic acid, i.e. prepared by transesterification reaction route (3) above. Preparation of the polyester by the latter especially preferred transesterification reaction is more particularly described in British Patent 924,607, published April 24, 1963, (to Imperial Chemical Industries Ltd.); K. Eise et al, German Preliminary Application 22 32 877, published January 17, 1974 and G. Bier, Polymer *15* 527—535 (1974).

The methyl methacrylate-1,3-butadiene-styrene polymer (MBS polymer) component

The MBS polymers, i.e. polymers comprising methyl methacrylate, 1,3-butadiene and styrene, employed as components of the compositions of the invention constitute a readily available class of

polymers (generally proprietary polymers) which are widely employed as impact-enhancing modifiers for polyvinyl halide resins. The MBS polymers as manufactured for use as polyvinyl halide impact modification agents are generally graft polymers prepared by polymerizing methyl methacrylate (and optionally in minor proportion to the methacrylate monomer ethylenically unsaturated comonomers copolymerizable therewith such as acrylonitrile or styrene) in the presence of a polybutadiene or a polybutadiene-styrene trunk polymer rubber, as described in L. I. Nass Ed. "Encyclopedia of PVC", M. Dekker, Inc., Vol. 2, 1977, page 613, Section 2(a). It is well understood that a wide variety of grafting conditions and choice of comonomers can be employed in the preparation of the MBS polymer. Alternatively, the MBS polymer may be a blend of a methyl methacrylate-styrene copolymer, for example, a terpolymer of methyl methacrylate, styrene and acrylonitrile, in minor amount, with either polybutadiene or a copolymer of butadiene and minor proportions of such comonomers as for example, styrene and acrylonitrile as disclosed by R. E. Gallagher, US Patent 3,933,393.

Preferably, the MBS polymer component consists essentially of methyl methacrylate, 1,3-butadiene and styrene monomer components. Typical graft polymerization sequences and/or comonomers for use with the methacrylate monomer in preparation of the MBS polymer modifiers are disclosed in the following US Patents: 3,670,052; 3,651,177; 3,287,443; 2,943,074; 2,018,268; 3,444,269; 3,445,416; 3,652,483; 3,652,727; 3,657,390; 3,717,688; 3,775,514; 3,780,134; 3,842,144; 3,907,928; 3,922,320; 4,021,509; 4,041,106; as well as German Offenlegungschrift of S. Koyanigi et al. 2,064,297.

Proprietary MBS polymers include Blendex 436 (manufactured by Borg-Warner Co.), an MBS polymer modified with residues of acrylonitrile, as well as Acryloid KM229, KM607-N and KM611 of Rohm and Haas Co. (described in R. P. Petrich, Polymer Eng. and Sci., July 1978, Vol. 13, No. 4, pages 248—258 and in J. T. Lutz, Jr., Adv. in Chem. Ser. No. 134, 1974, pages 61—72) as well as Kane Ace B-12 and B-22 manufactured by Kanegafuchi Chemical Industry Co., the latter proprietary MBS polymer being prepared in accordance with the technology of the above-mentioned US Patents 3,387,443; 3,651,177 and 3,670,052 of K. Saito et al.

The SAN polymer component

The SAN polymer additive of the present composition is a known genus of polymer consisting essentially of a styrenic monomer component, including styrene as well as an alpha-lower alkylsubstituted styrene or mixtures thereof and an acrylonitrilic monomer component including acrylonitrile as well as an alpha-lower alkyl substituted acrylonitrile or mixtures thereof. By lower-alkyl is meant a straight or branched chain alkyl group of 1 to 4 carbon atoms exemplified by the methyl, ethyl, isopropyl and t-butyl groups. In readily available SAN polymers, the styrene component is generally styrene, alpha-straight chain alkyl substituted styrene, typically alpha-methyl-styrene, or mixtures thereof with styrene being preferred. Similarly in the readily available SAN polymers, the acrylonitrile component is generally acrylonitrile, alpha-methyl-acrylonitrile or mixtures thereof with acrylonitrile being preferred.

In the SAN polymer and styrene component is present in a major weight proportion, i.e. in a weight proportion of greater than 50%, typically 65% to 90%, especially 70% to 80%, based on the combined weight of the styrene component and the acrylonitrile component. The acrylonitrile component is present in a minor proportion, i.e. in a weight proportion of less than 50%, typically 10% to 35% especially 20% to 30% based on the combined weight of the styrene monomer component and the acrylonitrile monomer component.

The SAN polymer class is more particularly identified and described in R. E. Gallagher, US Patent 3,988,393, issued October 26, 1976 (especially at Column 9, lines 14—16 and in Claim 8), in "Whittington's Dictionary of Plastics", Technomic Publishing Co., First Edition, 1968, page 231, under the section headed "Styrene-Acrylonitrile Copolymers (SAN)", and R. B. Seymour, "Introduction to Polymer Chemistry", McGraw-Hill, Inc., 1971, page 200, (last two lines) to page 201 (first line). The preparation of a SAN polymer by copolymerization of styrene and acrylonitrile is more particularly described in the "Encyclopedia of Polymer Science and Technology", John Wiley and Sons, Inc., Vol. 1, 1964, pages 425—435.

Proprietary SAN polymer compositions include compositions manufactured under the designation "Tyril" by the Dow Chemical Co., such as Tyril 860, Tyril 867, Tyril 870 and Tyril 880, compositions manufactured under the designation "Lustran" by Monsanto Corporation as well as compositions manufactured under the designations C-11, RMD 4511; C-11, RMD 4520; C-11, RMD 4400; and C-11, RMDA 4420 by Union Carbide Corporation. Use of the aforementioned proprietary Tyril compositions as the SAN polymer component of the invention, especially Tyril 860, provides an especially good result in the practice of the invention.

Most preferably, the polymeric additive employed in the present polyester-MBS polymer compositions consists essentially of an MBS polymer, i.e. the present polyester-MBS polymer blend composition is preferably a binary mixture of the MBS polymer and the polyester.

Most preferably, the polymeric additive in the present polyester-SAN polymer compositions consists essentially of a SAN polymer, i.e. the present polyester-SAN polymer blend composition is preferably a binary mixture of the SAN polymer and the polyester.

The novel resin compositions of the instant invention are prepared by blending the linear aromatic polyester with the MBS polymer or the SAN polymer in substantially molten condition. The blending or mixing process can be performed using conventional mixing equipment such as, for example, a Banbury mixer, mixing roll, kneader, screw extruder, or injection molding machine.

Although the mixing ratio may vary depending on the physical properties desired in the resultant polymer blend, the MBS polymer or the SAN polymer is generally present in a proportion of 1 to 99 weight percent based on the weight of the admixture of the polyester and the MBS polymer or SAN polymer.

The MBS polymer component is preferably present in a minor proportion, i.e. less than 50% by weight of the combined weight of the polyester and MBS resins, typically in an amount of 2 parts to less than 50 parts by weight per 100 weight parts of blended resin admixture. An especially good result is obtained employing the MBS polymer additive in a proportion of 5 parts to 30 parts per 100 parts by weight of polyblend admixture.

Similarly, it is preferred that the SAN polymer component be in a minor weight proportion based on the combined weight of the polyester and SAN polymer. More preferably, the SAN polymer is present in a proportion of 1 to 30 weight parts, per 100 parts of the SAN polymer and the polyester mixture. Use of the SAN polymer in a proportion of 1 to 15 weight parts per 100 parts of the mixture is especially desirable to obtain a composition of the invention of exceptionally enhanced impact resistance.

The novel polymer compositions of the present invention may also include various additives such as organic or inorganic fillers, stabilizers, antistatic agents, and flame retardants.

The halogen-containing flame retardant agents described in U.K. Published Application No. 2002402A (published 21st February, 1979) can be employed in the present compositions.

The additive-containing resin mixture of the invention may be prepared, if desired, by charging the polyester and MBS polymer or the polyester and the SAN polymer with the additive to a conventional mixing apparatus, such as a premix mixer, or melt extruder. The resultant additive-containing composition can then be molded directly in an injection molding apparatus of an extruder. The molded articles thus formed have excellent hydrolytic stability and tensile strength.

The fillers which may be employed in the invention are preferably particulate fillers such as particulate glass (e.g. chopped glass fiber, glass rovings, glass microballons or microspheres and pulverulent glass), particulate clay, talc, mica, inorganic natural fibers, synthetic organic fibers, alumina, graphite, silica, calcium carbonate, carbon black, magnesia and the like. Generally, such fillers are added to reinforce the structural integrity of a polymer, e.g. to inhibit sagging and/or to improve the tensile strength and stiffness of the polymer composition and also to reduce shrinkage, minimize crazing, lower material costs, impart color or opacity, and improve the surface finish of the polymer composition. Generally, the amount of particulate filler employed in the compositions of the invention is in the range of 5 to 70 weight percent, preferably 5 to 40 weight percent, and especially 8 to 30 weight percent based on the combined weight of the polyester and the MBS or SAN polymer additive. The filler employed is preferably inorganic.

According to the invention, use of a particulate glass filler, advantageously glass fibers, is especially desirable.

The glass filler, especially glass fiber filler, employed in the invention preferably contains an organic coupling agent as a very thin coating on the glass particles. The coupling agent forms an adhesive bridge between the glass and the polymer blend thereby enhancing the strength properties of the filled polymer blend. Typically, organic coupling agents employed in the art include transition metal complexes of unsaturated aliphatic acids such as the methacrylato chromic chloride complex as well as various organic silane compounds including vinyl trichlorosilane, as well as the other exemplified silane coupling agents listed in U.K. Published Application No. 2002402 A (published 21 February 1979).

Preferably, the coupling agent employed with the glass filler according to the invention is a silane coupling agent.

Glass fillers are frequently manufactured and sold so as to contain the coupling agent as a proprietary ingredient on the surface of the glass. The coupling agents and their use with glass fillers are discussed in more detail in W. V. Titow and B. J. Lanham, "Reinforced Thermoplastics", Halstead Press, 1975, pages 83—88 and L. Mascia, "The Role of Additives in Plastics", J. Wiley and Sons, 1974, pages 89—91.

The present blends have utility as engineering thermoplastics in manufacture of automotive parts as well as housings and casings of electrically operated apparatus such as radios and power tools, for example, drills and saws. On account of the enhanced hydrolytic stability of the present blends, the present compositions are also useful for manufacture of household wares designed for exposure to moisture at elevated temperatures such as dishes, particularly oven ware, and the handles and covers of coffee and tea pots.

The following examples further illustrate the various aspects of the invention but are not intended to limit it. Various modifications can be made in the invention without departing from the spirit and scope thereof. Where not otherwise specified in this specification and claims, temperatures are given in degrees centigrade, and all parts and percentages are by weight.

Example 1 (Control)

A bisphenol-A—isophthalate—terephthalate polyester is prepared by reaction of the bisphenol with diacid halides of isophthalic acid and terephthalic acid as follows:

A mixture of 21,636 grams (94.74 moles) of bisphenol-A, 16,565 grams (81.60 moles) of isophthaloyl chloride, 2,924 grams (14.4 moles) of terephthaloyl chloride, 380 grams (2.153 moles) of paratertiary butyl phenol, and 234 kg (515 pounds) of methylene chloride solvent are charged under a blanket of dry nitrogen gas to a dry 379 litre (100 U.S. gallon) reaction vessel equipped with agitation means. To a 189 litre (50 U.S. gallon) addition vessel is charged 20,067 grams (198.31 moles) of triethylamine catalyst. The triethylamine is added gradually at a temperature of 10° to 20° to the agitated reaction mixture from the addition vessel over a period of 3 hours and 25 minutes under a blanket of dry nitrogen.

The 189 litre (50 U.S. gallon) addition vessel is then rinsed with 113 kg (250 pounds) of methylene chloride and the methylene chloride rinse is added to the reaction mixture in the polyesterification reaction vessel. Agitation of the reaction mass is continued for 3 hours at about 20°C. The mixture of 600 ml of concentrated aqueous hydrochloric acid dissolved 57 litres (15 U.S. gallons) of deionized water are stirred into the reaction mixture. The reaction mass is allowed to stratify into an upper aqueous layer and a lower organic layer containing the polyester product. The lower organic layer is withdrawn and then washed free of chloride ion with deionized water.

The resulting organic layer is divided into two equal portions. Isopropyl alcohol (86 kg or 190 pounds) is added to each portion to precipitate the polyester. On completion of the addition methylene chloride solvent is removed by distillation. During the distillation an additional 27 kg (60 pounds) of isopropyl alcohol is added to each portion to ensure complete precipitation of the polyester product. The precipitated polyester products are recovered from each isopropylalcohol containing distillant portion, combined and dried to obtain an excellent yield of a linear aromatic polyester of bisphenol-A, isophthalic acid and terephthalic acid having a mole ratio of terephthaloyl monomer residues to isophthaloyl monomer residues of about 15:85. The polyester product has an intrinsic viscosity of 0.58 dl/g as determined at a temperature of 30° at a concentration of 0.5% in a symmetrical tetrachloroethane solution of the polyester.

The polyester made by the foregoing solution polymerization preparatory procedure, after being dried at 120° for four hours, is compacted by extrusion from a Haake extruder operating under the following conditions:

| | Temperature in °C of | | | | | | |
|---|---|---|---|---|---|---|---|
| RPM | Zone 1 | Zone 2 | Zone 3 | Zone 4 | Die melt | Torque | Amp |
| 90 | 290° | 290° | 290° | 290° | 310° | (4000—5000m.-g.) 39—49 N · m | 75 |

The compacted extruded polyester strands are chopped into pellets which are dried and injected molded into specimens suitable for evaluation of properties, e.g. tensile properties, in an Arburg Injection Molding Apparatus Model 220 operating under the following conditions:

| | |
|---|---|
| Cylinder Temperature | 327°C (620°F) |
| Mold Temperature | 121°C (250°F) |
| Molding Pressure | 122500kPa (17,760 psi) |

The heat distortion temperature at 1820 kPa (264 psi) i.e. HDT the Notched Izod impact resistance, the tensile strength and tensile modulus of the molded polyester are measured and these data are presented with the foregoing injection molding conditions in the Table below. Additional specimens of the injection molded polyester are immersed in a bath of boiling water of substantially neutral pH for one week. After being raised from the bath these specimens are tested for tensile modulus and tensile strength which data are also presented in Table 1 below.

Example 2 (Control)

A procedure substantially similar to that of Example 1 is employed to prepare and injection mold a polyester of bisphenol-A, isophthalic acid and terephthalic acid monomer residues containing substantially the same molar ratio of isophthaloyl and terephthaloyl monomer residues as the product of Example 1. The intrinsic viscosity of the polyester product prior to molding is measured as described in Example 1 above is 0.63 dl/g. The polyester properties described in Example 1 above are measured for this product and are also presented in Table I below together with the operating conditions used in injection molding of the polyester. In this Example the tensile properties of the injected polyester are also measured after a two-week immersion in boiling water.

Example 3

A physical mixture of 240 parts of the dry linear aromatic polyester of Example 1 and 30 parts of a proprietary acrylonitrile modified MBS polymer manufactured by Borg Warner Chemicals under the designation Blendex 436 are compacted, injected-molded and tested for properties substantially as described in Example 1 above. The injection molding conditions and the properties of the resulting polyester-MBS polymer blend which contains about 11% of the MBS polymer based on the combined weight of the polyester are presented in Table I below.

Example 4

The procedure of Example 3 is repeated substantially as described above in preparing and injection molding a blend of the polyester of Example 1 and the MBS polymer of Example 3 employing 600 parts of the polyester and 200 parts of the MBS polymer (corresponding to about 25% of the MBS polymer based on the combined weight of the polyester and MBS polymer conponents in the blend). The blend of this Example is tested for properties substantially as described in Example 3 and these results are presented with injection molding operating conditions in Table I below.

Example 5

The procedure of Example 4 is repeated substantially as described except that in place of the polyester of Example 1 there is employed the polyester of Example 2 and in place of the proprietary MBS polymer additive of Example 4 there is employed an MBS polymer manufactured by the Kanegafuchi Chemical industry Co., Ltd. under the designation Kane Ace B 22. The results of this Example are also presented in Table I below.

Example 6

The procedure of Example 5 is repeated substantially as described except that the blend of polyester and MBS polymer additive is prepared from a mixture of 600 parts of the polyester and 75 parts of the MBS polymer additive corresponding to about 11% of the MBS polymer additive based on the combined weight of resins in the blend. The results of this Example are also compared with the results of the preceding Example in Table I below.

Example 7

A glass fiber filled blend of a linear aromatic polyester and MBS polymer additive is prepared employing 240 parts of the linear aromatic polyester of Example 1, 30 parts of the MBS polymer additive of Example 3 (corresponding to 11% of this additive based on the resin components of the blend) and 30 parts of a proprietary chopped glass fiber (0.48 cm or 3/16 inch length) reinforcement filler containing a proprietary silane coupling agent, said proprietary glass filler being manufactured under the designation 419AA by the Owens Corning Fiberglass Company. The preparatory procedure employed in this Examples is substantially that of the foregoing Examples with the exception that the initially obtained injection molded filled product is ground, dried and remolded in the injection molding apparatus to insure homogeneous distribution of glass fiber filler in the product. There is obtained an excellent filled blend in accordance with the invention. The results of this Example are also tabulated in Table I below.

TABLE I

| | Ex. 1 (Control) | Ex. 2 (Control) | Example 3 |
|---|---|---|---|
| Bisphenol Polyester (Percent) | 100 | 100 | 89% (Polyester of Ex. 1) |
| MBS Polymer Additive (Percent) | none | none | 11% (Blendex 436) |
| Injection Molding Conditions | | | |
| Cylinder Temperature °C (°F) | 327(620°) | 332(630°) | 321(610°) |
| Mold Temperature °C (°F) | 121(250°) | 121(250°) | 121(250°) |
| Injection Pressure kPa (psi) | 122500(17,760) | 130100(18,870) | 107100(15,540) |
| Properties | | | |
| HDT at 1820 kPa (264 psi)°C(°F) | 72.4(162.3°) | 73.7(164.6°) | 68.2(154.7°) |
| Notched Izod impact Resistance Joules/2.54 cm (ft-lbs/in) | 8.3(6.1) | 11(8.1) | 8.0(5.9) |
| Tensil Properties Prior To Immersion: | | | |
| Tensile Strength kPa (psi) | 67000(9700) | 69000(10,000) | 57250(8304) |
| Tensile Modulus kPa x $10^5$ (psi x $10^5$) | 20.7(3.0) | 20.8(3.02) | 20.1(2.91) |
| After 1 week Immersion in Boiling Water: | | | |
| Tensile Strength kPa (psi) | 26200(3800) | 58000(8400) | 60100(8716) |
| Tensile Modulus, kPa x $10^5$ (psi x $10^5$) | 22.5(3.27) | 22.4(3.25) | 18.4(2.67) |
| After 2 week Immersion in Boiling Water | | | |
| Tensile Strength kPa (psi) | — | 13800(2000) | 56450(8187) |
| Tensile Modulus kPa x $10^5$ | — | 23.0(3.33) | 25.5(3.7) |
| (psi x $10^5$) | — | 23.0(3.33) | 25.5(3.7) |

TABLE I (Continued)

| | Example 4[a] | Example 5[a] | Example 6[a] | Example 7[a,b] |
|---|---|---|---|---|
| Bisphenol Polyester (Percent) | 75% (Polyester of Ex. 1) | 75% (polyester of Ex.2) | 89% (polyester of Ex. 2) | 89% (polyester of Ex. 1) |
| MBS Polymer Additive (Percent) | 25% (Blendex 436) | 25% (Kane Ace B-22) | 11% (Kane Ace B-22) | 11% (Blendex 436) |
| Injection Molding Conditions | | | | |
| Cylinder Temperature °C(°F) | 316(600°) | 304(580°) | 321(610°) | 316(600°) |
| Mold Temperature °C(°F) | 121(250°) | 121(250°) | 121(250°) | 116(240°) |
| Injection Pressure kPa (psi) | 99490(14,430) | 122500(17,760) | 137800(19,980) | 84190(12,210) |
| Properties | | | | |
| HDT at 1820 kPa (264 psi) °C(°F) | — | — | — | 73.1(163.5°) |
| Notched Izod Impact Resistance Joules/2.54 cm (ft-lbs/in) | | | | 2.09(1.54) |
| Tensile Properties Prior To Immersion: | | | | |
| Tensile Strength kPa (psi) | 42970(6232) | 44730(6487) | 56890(8251) | 72623(10,533) |
| Tensile Modulus, kPa×10⁵ (psi×10⁵) | 16.8(2.43) | 16.9(2.45) | 19.6(2.84) | 30.7(4.45) |
| After 1 Week Immersion in Boiling Water: | | | | |
| Tensile Strength kPa (psi) | 45040(6533) | 48610(7051) | 61250(8883) | — |
| Tensile Modulus, kPa×10⁵ (psi×10⁵) | 16.6(2.4) | 17.3(2.51) | 20.8(3.01) | — |
| After 2 Weeks Immersion in Boiling Water | | | | |
| Tensile Strength kPa (psi) | — | 49820(7226) | 62370(9046 | — |
| Tensile Modulus kPa×10⁵ (psi×10⁵) | — | 17.7(2.56) | 21.0(3.04) | — |

Notes to table

[a] The molded product blends of Examples 4—7 are also tested percent elongation. The percent elongation (yield) of these products are:

Example 4: 7.1% prior to boiling water immersion, 5.7% after immersion;
Example 5: 6.3%, prior to immersion, 5.4%, after one week immersion, 5.1%, after two weeks immersion,
Example 6: 6.8%, prior to immersion, 5.8%, after one week immersion, 5.3%, after two weeks immersion, and
Example 7: 5.0%

[b] The molded product blend of Example 7 contains about 11% glass fiber based on the combined weight of the polyester and the MBS polymer components of the blend.

Comparison of the product tensile strengths of the pure molded polyester in Control Examples 1 and 2 prior to and subsequent to immersion in boiling water with the corresponding product tensile strengths in the Examples describing blends of the MBS polymer additive and the corresponding polyester indicate the enhancement in hydrolytic stability achieved by blending the polyester with the MBS polymer according to the invention.

For example, the percentage loss in tensile strength of the polyester of Control Example 2 is about 16% on one week immersion in boiling water and is about 80% on two weeks immersion in boiling water. In unexpected contrast to these results, the products of Examples 5 and 6 containing respectively about 25 weight percent and about 11 weight percent of MBS polymer additive blended with said polyester exhibit no loss in tensile strength on one week immersion or even on two weeks immersion in boiling neutral water.

Example 8

A physical mixture of 240 parts of the dry linear aromatic polyester of Example 1 and 30 parts of a proprietary SAN polymer manufactured by Dow Chemical Corp. under the designation Tyril 860 are compacted, injection molded and tested for properties substantially as described in Example 1 above except that additionally a portion of the specimens of this blend are allowed to remain in boiling water for two weeks and are then tested for tensile strength and modulus properties. The injection molding compositions and the properties of the resulting polyester-SAN polymer blend which contains about 11% of the SAN polymer, based on the combined weight of the polyester and the SAN polymer are presented in Table II below.

Example 9

The procedure of Example 8 is repeated substantially as described above in preparing and injection molding a blend employing 600 parts of the polyester and 75 parts of the SAN polymer (corresponding to about the same proportion of the SAN polymer as in Example 8) omitting the second week of immersion of the mold blend in boiling water. The results of this Example are presented in Table II below.

Example 10

The procedure of Example 8 is repeated substantially as described in preparing and testing a blend containing about 25% of the SAN polymer additive and about 75% of the polyester except that boiling water immersion is omitted. An excellent blend according to the invention, is obtained. The results of this Example are also presented in Table II below.

Example 11

A glass fiber filled blend of a linear aromatic polyester and SAN polymer additive is prepared employing 240 parts of the linear aromatic polyester of Example 1, 30 parts of the SAN polymer additive of Example 8 (corresponding to about 11% of this additive based on the SAN polymer and polyester components of the blend) and 30 parts of a proprietary chopped glass fiber (0.48 cm or 3/16 inch length) as reinforcement filler containing a proprietary silane coupling agent, said proprietary glass filler being manufactured under the designation 419AA by the Owens Corning Fiberglass Company. The preparatory procedure employed in this Example is substantially that of the preceding Example with the exception that, to insure homogeneous distribution of the glass fiber filler in the product, the initially obtained injection molded filled product is ground, dried and remolded in the injection molding apparatus. There is obtained an excellent filled blend in accordance with the invention. The results of this Example are also tabulated in Table II below.

TABLE II

| | Ex. 1 (control) | Example 8 | Example 9[a] | Example 10 | Example 11[a,b] |
|---|---|---|---|---|---|
| Bisphenol Polyester (Percent) | 100% | 89% | 89% | 75% | 89% |
| SAN Polymer Additive (Percent) | none | 11% (Tyril 860) | 11% (Tyril 860) | 25% (Tyril 860) | 11% (Tyril 860) |
| Injection Molding Conditions | | | | | |
| Cylinder Temperature °C(°F) | 327(620°) | 293(560°) | 304(580°) | 299(570°) | 299(570°) |
| Mold Temperature °C(°F) | 121(250°) | 121(250°) | 121(250°) | 121(250°) | 116(240°) |
| Injection Pressure, kPa (psi) | 122500(17,760) | 106500(15,440) | 91840(13,320) | 53570(7,770) | 99490(14,430) |
| Properties | | | | | |
| HDT at 1820 kPa (264 psi) °C(°F) | 72.4(162.3°) | 68.0(154.4°) | — | 48.7(119.6) | 75(167°) |
| Notched Izod Impact Resistance Joules/2.54 cm (ft-lbs/in) | 8.3(6.1) | 20.1(14.8) | — | 1.6(1.2) | 2.26(1.67) |
| Tensile Properties Prior To Immersion: | | | | | |
| Tensile Strength, kPa (psi) | 66900(9700) | 67710(9821) | 68240(9898) | — | 91749(13,307) |
| Tensile Modulus, kPa×10$^5$ (psi×10$^5$) | 20.7(3.0) | 23.7(3.44) | 25.4(3.69) | — | 42.9(6.22) |
| After 1 Week Immersion in Boiling Water: | | | | | |
| Tensile Strength, kPa (psi) | 26200(3800) | 71147(10,319) | 69051(10,015) | — | — |
| Tensile Modulus, kPa×10$^5$ (psi×10$^5$) | 22.5(3.27) | 23.2(3.37) | 25.2(3.65) | — | — |
| After 2 Weeks Immersion in Boiling Water | | | | | |
| Tensile Strength, kPa (psi) | — | 74484(10,803) | — | — | — |
| Tensile Modulus, kPa×10$^5$ (psi×10$^5$) | — | 36.4(5.28) | — | — | — |

Notes to table

[a] The molded product blends of Examples 9 and 10 are also tested for percent elongation. The percent elongation (yield) of these products are:

Example 9: 6.6%, prior to boiling water immersion,
5.7%, after immersion;
Example 10: 3.7%,

[b] The molded product blend of Example 11 contains about 11% glass fiber based on the combined weight of the polyester and the SAN polymer components of the blend.

Comparison of the product tensile strengths of the pure molded polyester in Control Example 1, prior to, and subsequent to immersion in boiling water with the corresponding product tensile strengths in the Examples 8 and 9 which describe blends of the SAN polymer additive and the corresponding polyester indicate the unexpected enhancement in hydrolytic stability achieved by blending the polyester with the SAN polymer according to the invention.

For example, the percentage loss in tensile strength of the polyester of Control Example 1 on one week immersion in boiling water is more than about 60%.

In unexpected contrast to this result, the products of Examples 8 and 9 (containing about 11 weight percent of SAN polymer additive blended with said polyester) exhibit substantially no loss in tensile strength on one week immersion in boiling water. The product blend of Example 8 even retains substantially all of its original tensile strength on a two week immersion in boiling water.

Example 12 (Control)

A bisphenol-A—isophthalate—terephthalate polyester is prepared by a semi-continuous transesterification procedure as follows:

Mixtures of 75/25 diphenyl isophthalate/diphenyl terephthalate and bisphenol-A were vacuum oven-dried for about 3 hours at 267 Pa (2 mm Hg) in large flat trays then weighted into polyethylene-lined 18.9 litre (5 U.S. Gallon) pails and sealed until used.

The proportions used of the bisphenol and diaryl ester mixture are initially 16.25 moles (3.7 kg) and 16.33 moles (5.2 kg), respectively, providing a mole percent excess of the diaryl ester reactant over the bisphenol of about 0.5%. Later in the reaction, the proportions of the reactants are adjusted to provide a mole percent excess of the diaryl ester of about 0.75 mole percent over the bisphenol and still later, the proportions of reactants are adjusted to provide diaryl ester in a mole percent excess of about 1.0% over the bisphenol.

The diphenyl isophthalate, diphenyl terephthalate, and bisphenol-A are charged to a stainless steel melt tank and melted at about 100°C under a blanket of dry nitrogen. The molten monomer mixture is transferred via heated lines to a continuously stirred oil heated reactor. Catalyst (potassium phenoxide, 0.041 molar solution in phenol, 0.0081 moles, i.e. 0.05 mole percent based on bisphenol-A) is added. Vacuum is applied and the temperature (which is initially 220°) is raised gradually. After about 2.5 hours, the pressure is about 70 mm and the temperature is 280°C. Intrinsic viscosity of the polyester prepolymer at this point is about 0.17 dl/g.

The prepolymer is transferred via heated lines to a second stirred reactor and another prepolymer is prepared similarly to the first stirred reactor. The prepolymer in the second stirred reactor is fed continuously at about 9 to 11 kg/hour (20—25 lbs/hour) to a vertical wiped thin film reactor which is maintained at an internal temperature of 300°C. and a pressure of 200 Pa (1.50 mm Hg (abs.)). The reaction mass fed to the top of the wiped thin film reactor flows down through the reactor propelled by gravity and by the downward thrust of the pitched rotor blades. These blades also agitate and renew the polymer on the heated reaction surface of the thin film reactor. The material leaving the thin film reactor has an intrinsic viscosity of about 0.4 dl/g.

The polymer is pumped out from the bottom of the wiped thin film reactor and fed to a 5-stage twin screw horizontal extruder having five vacuum vents (one from each stage). The extruder is operated at about 106 Pa (0.8 mm Hg (abs.)) pressure, 330°C melt temperature and a screw speed of 125 rpm. The pressure and temperature are maintained uniformly throughout the barrel, i.e. through the extruder stage. Under these operating conditions, light yellow, clear, tough polymer is produced at a rate of 9 kg/hour (20 lbs/hour). The product has an intrinsic viscosity of about 0.60 dl/g.

The polyester made by the foregoing melt transesterification polymerization preparatory procedure, after being dried for about 16 hours is compacted by extrusion from a Haake extruder operating under the following conditions:

| RPM | Zone 1 | Zone 2 | Temperature in °C of<br>Zone 3 | Zone 4 | Die melt | Torque | Amp. |
|---|---|---|---|---|---|---|---|
| 50 | 360° | 360° | 340° | 340° | 350° | (11,000 m-g)<br>107.9 N·m | 40 |

The compacted extruded polyester stands are chopped into pellets which are dried and injected molded into sample specimens suitable for evaluation of properties, e.g. tensile properties, on an Arburg Injection Molding Apparatus Model 220, operating under the following conditions:

| | |
|---|---|
| Cylinder Temperature | 316°C (600°F) |
| Mold Temperature | 121°C (250°F) |
| Molding Pressure | 99490 kPa (14,430 psi) |

The tensile strength of the molded polyester is measured and this data is presented with the foregoing injection molding conditions in Table III below. Additional specimens of the injection molded

polyester are immersed in a bath of boiling water of substantially neutral pH for one and two weeks. After being raised from the bath, these specimens were tested for tensile strength. This data is also presented in Table III below.

Example 13

A physical mixture of 240 parts of the dry transesterification prepared linear aromatic polyester of Example 12 and 30 parts of the SAN polymer of Example 9 are compacted, injection molded and tested for properties substantially as described in Example 12 above. The injection molding compositions and the properties of the resulting polyester-SAN polymer blend which contains about 11% of the SAN polymer, based on the combined weight of the polyester and the SAN polymer, are presented in Table III below.

Example 14

A physical mixture of 89 parts of the dry linear aromatic polyester of Example 12 and 11 parts of a proprietary acrylonitrile modified MBS polymer of Example 3 are compacted, injection molded and tested for properties substantially as described in Example 12 above. The injection molding conditions and the properties of the resulting polyester-MBS polymer blend which contains about 11% of the MBS polymer based on the combined weight of the polyester, and the MBS polymer are presented in Table III below.

Example 15

The procedure of Example 14 is repeated substantially as described above in preparing and injection molding a blend of the polyester of Example 12 and the MBS polymer of Example 3 employing 75 parts of the polyester and 25 parts of the MBS polymer (corresponding to about 25% of the MBS polymer based on the combined weight of the polyester and MBS polymer components in the blend). The blend of this Example is tested for properties substantially as described in Example 12 and these results are presented with injection molding operating conditions in Table III below.

Example 16

The procedure of Example 14 is repeated substantially as described except that in place of the proprietary MBS polymer additive of Example 14, there is employed the MBS polymer of Example 5. The results of this Example are also presented in Table III below.

Example 17

The procedure of Example 16 is repeated substantially as described except that the blend of polyester and MBS polymer additive is prepared from a mixture of 75 parts of the polyester and 25 parts of the MBS polymer additive corresponding to about 25% of the MBS polymer additive based on the combined weight of the polyester and the MBS polymer in the blend. The results of this Example are compared with the results of the preceeding Examples 12—16 in Table III below.

TABLE III

| | Example 12 (Control) | Example 13 | Example 14 | Example 15 | Example 16 | Example 17 |
|---|---|---|---|---|---|---|
| Bisphenol Polyester (%) | 100% | 89% | 89% | 75% | 89% | 75% |
| SAN Polymer Additive (%) | — | SAN Polymer of Ex. 8 (11%) | — | — | — | — |
| MBS Polymer Additive (%) | — | — | MBS Polymer of Ex. 3 (11%) | MBS Polymer of Ex. 3 (25%) | MBS Polymer of Ex. 5 (11%) | MBS Polymer of Ex. 5 (25%) |
| Injection Molding Conditions | | | | | | |
| Cylinder Temperature °C(°F) | 316(600°) | 288(550°) | 299(570°) | 299(570°) | 299(570°) | 293(560°) |
| Mold Temperature °C(°F) | 121(250°) | 121(250°) | 121(250°) | 121(250°) | 121(250°) | 121(250°) |
| Injection Pressure, kPa (psi) | 99490(14,430) | 91840(13,320) | 76500(11,100) | 68900(9,990) | 114800(16,650) | 107100(15,540) |
| Tensile Properties Prior to Immersion | | | | | | |
| Tensile Strength kPa (psi) | 70090(10,166) | 70590(10,238) | 31050(4,503) | 40280(5,842) | 58900(8,543) | 46930(6,807) |
| After One (1) Week Immersion in Boiling Water | | | | | | |
| Tensile Strength kPa (psi) | 2940(427) | 20120(2,918) | 4760(691) | 11790(1,710) | 37510(5,440) | 49530(7,184) |
| After Two (2) Weeks Immersion in Boiling Water | | | | | | |
| Tensile Strength, kPa (psi) | 1400(203) | 5160(749) | 3060(444) | 5460(792) | 11400(1,654) | 37050(5,374) |

## Claims

1. A thermoplastic polymer composition characterised by comprising a mixture of (a) a linear aromatic polyester prepared from a bisphenol and a dicarboxylic acid, and (b) an MBS polymer prepared from methyl methacrylate, 1,3-butadiene and styrene or a SAN polymer prepared from a styrenic monomer and an acrylonitrilic monomer.

2. A composition according to claim 1 characterised in that said dicarboxylic acid has the formula:

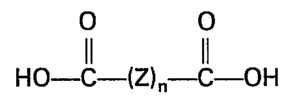

wherein Z is alkylene —Ar— or —Ar—Y—Ar— where Ar is aromatic, Y is alkylene, haloalkylene, —O—, —S—, $—SO_2—$, $—SO_3—$, —CO—,

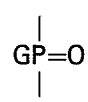
or
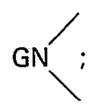
;

wherein G is alkyl, haloalkyl, aryl, haloaryl, alkylaryl, haloalkylaryl, arylalkyl, haloarylalkyl, cycloalkyl or cyclohaloalkyl; and n is 0 or 1.

3. A composition according to claim 2 characterised in that said aromatic dicarboxylic acid is isophthalic acid, terephthalic acid, or a mixture thereof.

4. A composition according to claim 1, 2 or 3 characterised in that said bisphenol has the formula:

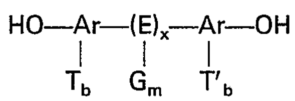

wherein Ar is aromatic, G is alkyl, haloalkyl, aryl, haloaryl, alkylaryl, haloalkyaryl, arylalkyl, haloarylalkyl, cycloalkyl, or cyclohaloalkyl; E is alkylene, haloalkylene, cycloalkylene, halocycloalkylene, arylene, or haloarylene, —O—, —S—, —SO—, $—SO_2—$, $—SO_3—$, —CO—

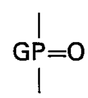
or
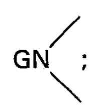
;

T and T′ are independently selected from halogen, G and OG; m is 0 or an integer from 1 to the number of replaceable hydrogen atoms on E; b is 0 or an integer from 1 to the number of replaceable hydrogen atoms on Ar, and x is 0 or 1.

5. A composition according to claim 4 characterised in that the biphenol is bisphenol A.

6. A composition according to any one of the preceding claims characterised in that the polyester has been prepared by transesterification.

7. A composition according to claim 6 characterised in that the polyester has been prepared by a transesterification reaction between the bisphenol and a di- ester of the dicarboxylic acid and a monohydroxy phenolic compound of the benzene or naphthalene series of 6 to 20 carbon atoms.

8. A composition according to any one of the preceding claims characterised in that said MBS polymer and said polyester are essentially the only polymeric ingredients.

9. A composition according to claim 8 characterised in that the MBS polymer consists of methyl methacrylate,1,3-butadiene and styrene monomer components.

10. A composition according to claim 8 characterised in that the MBS polymer also contains an acrylonitrile monomer component.

11. A composition according to any one of the preceding claims characterised in that an MBS polymer is present in an amount of from 1 to 99 parts by weight per 100 parts by weight of the mixture of the polyester and the MBS polymer.

12. A composition according to claim 11 characterised in that the MBS polymer is present in an amount of less than 50% by weight based on the combined weight of the polyester and the MBS polymer.

13. A composition according to claim 11 wherein the MBS polymer is present in an amount of from 5 to 30 parts per 100 parts by weight of the mixture.

14. A composition according to any one of claims 1 to 7 characterised in that said SAN polymer and said polyester are essentially the only polymeric ingredients.

15. A composition according to claim 14 characterised in that the SAN polymer consists of monomer residues of styrene and acrylonitrile.

16. A composition according to claim 14 or 15 characterised in that the SAN polymer is present

in an amount of from 1 to 99 parts by weight per 100 parts by weight of the mixture of the polyester and the SAN polymer.

17. A composition according to claim 16 characterised in that the SAN polymer is present in an amount of less than 50% by weight based on the combined weight of the mixture of polyester and SAN polymer.

18. A composition according to claim 17 characterised in that the SAN polymer is present in an amount of from 1 to 30 parts per 100 parts by weight of the mixture.

19. A composition according to claim 17 characterised in that the SAN polymer is present in an amount of from 1 to 15 parts per 100 parts by weight of the mixture.

20. A composition according to any one of the preceding claims characterised in that it also includes a filler material.

21. A composition according to claim 20 characterised in that said filler material is particulate glass.

22. A composition according to claim 21 characterised in that the filler material is glass fiber present in an amount of 5 to 70 weight percent based on the combined weight of (a) and (b).

23. A composition according to claim 22 characterised in that in the glass fiber contains an organic coupling agent.

24. A composition according to claim 23 characterised in that in said organic coupling agent is a silane.

25. Shaped articles formed from a composition as claimed in any one of the preceding claims.

**Patentansprüche**

1. Thermoplastische Polymer-Zusammensetzung gekennzeichnet durch den Gehalt einer Mischung aus (a) einem linearen aromatischen Polyester, der aus einem Biphenol und einer Dikarboxylsäure erhalten wurde, und (b) einem MBS Polymer, das aus einem Methylmethacrylat, 1,3-Butadien und Styrol erhalten wurde, oder einem SAN Polymer, das aus einem vom Styrol abgeleiteten Monomer und einem vom Acrylnitril abgeleiteten Monomer erhalten wurde.

2. Zusammensetzung nach Anspruch 1, dadurch gekennzeichnet, daß die Dikarboxylsäure folgende Formel hat:

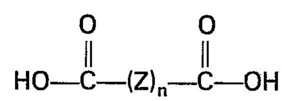

worin Z Alkylen, —Ar— oder —Ar—Y—Ar— mit Ar Für "aromatisch", Y Alkylen, Haloalkylen, —O—, —S—, —$SO_2$—, —$SO_3$—, —CO—,

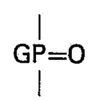 oder 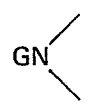

bedeutet, worin G für Alkyl, Haloalkyl, Aryl, Haloaryl, Alkylaryl, Haloalkylaryl, Arylalkyl, Haloarylalkyl, Cycloalkyl oder Cyclohaloalkyl steht und n=0 oder 1 ist.

3. Zusammensetzung nach Anspruch 2, dadurch gekennzeichnet, daß die aromatische Dikarboxylsäure Isophthalsäure, Terephthalsäure oder eine Mischung von diesen ist.

4. Zusammensetzung nach Anspruch 1, 2 oder 3, dadurch gekennzeichnet, daß das Biphenol folgende Formel hat:

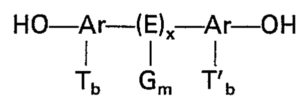

worin Ar für "aromatisch" steht, G Alkyl, Haloalkyl, Aryl, Haloaryl, Alkylaryl, Haloalkylaryl, Arylalkyl, Haloarylalkyl, Cycloalkyl oder Cyclohaloalkyl und E Alkylen, Haloalkylen, Cycloalkylen, Halocycloalkylen, Arylen oder Haloarylen, —O—, —S—, —SO—, —$SO_2$—, —$SO_3$—, —CO—

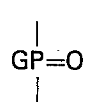 oder 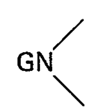

bedeutet und T und T' voneinander unabhängig für Halogen, G oder OG stehen, m=0 oder eine ganze Zahl von 1 bis zur Anzahl der substituierbaren Wasserstoffatome an E, b=0 oder eine ganze Zahl von 1 bis zur Anzahl der substituierbaren Wasserstoffatome an Ar und x=0 oder 1 ist.

5. Zusammensetzung nach Anspruch 4, dadurch gekennzeichnet, daß das Biphenol Biphenol-A ist.

6. Zusammensetzung nach einem der vorhergehenden Ansprüche, dadurch gekennzeichnet, daß der Polyester durch eine Umesterung erhalten wurde.

7. Zusammensetzung nach Anspruch 6, dadurch gekennzeichnet, daß der Polyester durch eine Umesterungsreaktion zwischen dem Biphenol und einem Diester der Dikarboxylsäure und einer Monohydroxyphenol-Verbindung, die sich vom Benzol oder der Naphthalinreihe mit 6 bis 20 Kohlenstoffatomen ableitet, erhalten wurde.

8. Zusammensetzung nach einem der vorhergehenden Ansprüche, dadurch gekennzeichnet, daß das MBS Polymer und der Polyester im wesentlichen die einzigen polymeren Bestandteile sind.

9. Zusammensetzung nach Anspruch 8, dadurch gekennzeichnet, daß das MBS Polymer aus Methylmethalcrylat-, 1,3-Butadien- und Styrol-Monomerkomponenten besteht.

10. Zusammensetzung nach Anspruch 8, dadurch gekennzeichnet, daß das MBS Polymer auch einen Acrylnitril-Monomerkomponenten enthält.

11. Zusammensetzung nach einem der vorhergehenden Ansprüche, dadurch gekennzeichnet daß das MBS Polymer in einer Menge von 1 bis 99 Gewichtsteilen auf 100 Gewichtsteile der aus dem Polyester und dem MBS Polymer bestehenden Mischung vorliegt.

12. Zusammensetzung nach Anspruch 11, dadurch gekennzeichnet, daß das MBS Polymer in einer Menge von weniger als 50 Gew,-%, bezogen auf das Gesamtgewicht von Polyester und MBS Polymer, vorliegt.

13. Zusammensetzung nach Anspruch 11, dadurch gekennzeichnet, daß das MBS Polymer in einer Menge von 5 bis 30 Teilen auf 100 Gewichtsteile der Mischung vorliegt.

14. Zusammensetzung nach einem der vorhergehenden Ansprüche 1 bis 7, dadurch gekennzeichnet, daß das SAN Polymer und der Polyester im wesentlichen die einzigen polymeren Bestandteile sind.

15. Zusammensetzung nach Anspruch 14, dadurch gekennzeichnet, daß das SAN Polymer aus Monomerresten des Styrols und Acrylnitrils besteht.

16. Zusammensetzung nach Anspruch 14 oder 15, dadurch gekennzeichnet, daß das SAN Polymer in einer Menge von 1 bis 99 Gewichtsteilen auf 100 Gewichtsteile der aus dem Polyester und dem SAN Polymer gebildeten Mischung vorliegt.

17. Zusammensetzung nach Anspruch 16, dadurch gekennzeichnet, daß das SAN Polymer in einer Menge von weniger als 50 Gew.-%, bezogen auf das Gesamtgewicht der aus Polyester und SAN Polymer gebildeten Mischung, vorliegt.

18. Zusammensetzung nach Anspruch 17, dadurch gekennzeichnet, daß das SAN Polymer in einer Menge von 1 bis 30 Teilen auf 100 Gewichtsteile der Mischung vorliegt.

19. Zusammensetzung nach Anspruch 17, dadurch gekennzeichnet, daß das SAN Polymer in einer Menge von 1 bis 15 Teilen auf 100 Gewichtsteile der Mischung vorliegt.

20. Zusammensetzung nach einem der vorhergehenden Ansprüche, dadurch gekennzeichnet, daß sie auch ein Füllmaterial enthält.

21. Zusammensetzung nach Anspruch 20, dadurch gekennzeichnet, daß das Füllmaterial aus Glasteilchen besteht.

22. Zusammensetzung nach Anspruch 21, dadurch gekennzeichnet, daß das Füllmaterial aus Glasfaserstoff besteht, der in einer Menge von 5 bis 70 Gew.-%, bezogen auf das kombinierte Gewicht von (a) und (b), vorliegt.

23. Zusammensetzung nach Anspruch 22, dadurch gekennzeichnet, daß der Glasfaserstoff ein organisches Kupplungsmittel enthält.

24. Zusammensetzung nach Anspruch 23, dadurch gekennzeichnet, daß in dem organischen Kupplungsmittel ein Silan vorliegt.

25. Formteile, die aus einer Zusammensetzung nach einem der vorhergehenden Ansprüche geformt wurden.

**Revendications**

1. Composition polymère thermoplastique, caractérisée en ce qu'elle comprend un mélange de (a) un polymère aromatique linéaire préparé à partir d'un bisphénol et d'un acide dicarboxylique, et (b) un polymère MBS préparé à partir de méthacrylate de méthyle, de butadiène 1,3 et de styrène ou un polymère SAN préparé à partir d'un monomère styrénique et d'un monomère acrylonitrilique.

2. Composition selon la revendication 1, caractérisée en ce que ledit acide dicarboxylique a la formule:

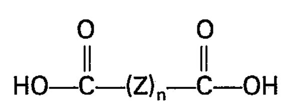

dans laquelle Z est un alkylène, —Ar— ou —Ar—Y—Ar— où Ar est aromatique, Y est un alkylène, un halogénoalkylène, —O—, —S—, —$SO_2$—, —$SO_3$—, —CO—, GP=O ou GN; dans lequel G est un

alkyle, und halogénoalkyle, un aryle, un halogénoaryle, un alkyralyle, un halogénoalkylaryle, un arylalkyle, un halogénoarylalkyle, un cycloalkyle ou un cyclohalogénoalkyle; et n est 0 ou 1.

3. Composition selon la revendication 2, caractérisée en ce que ledit acide dicarboxylique aromatique est l'acide isophtalique, l'acide téréphtalique, ou un mélange de ceux-ci.

4. Composition selon la revendication 1, 2 ou 3, caractérisée en ce que ledit bisphénol a la formule:

$$HO{-}\underset{T_b}{Ar}{-}\underset{G_m}{(E)_x}{-}\underset{T'_b}{Ar}{-}OH$$

dans laquelle Ar est aromatique, G est un alkyle, un halogénoalkyle, un aryle, un halogénoaryle, un alkylaryle, un halogénoalkylaryle, un arylalkyle, un halogénoarylalkyle, un cycloalkyle ou un cyclohalogénoalkyle; E est un alkylène, un halogénoalkylène, un cycloalkylène, un halogénocycloalkylène, un arylène ou un halogénoarylène, —O—, —S—, —SO—, $—SO_2—$, $—SO_3—$, —CO— GP=O ou GN; T et T' sont choisis indépendamment parmi les halogènes, G et OG, m est 0 ou un nombre entier de 1 au nombre d'atomes d'hydrogène remplaçables sur E; b est 0 ou un entier de 1 au nombre d'atomes d'hydrogène remplaçables sur Ar, et x est 0 ou 1.

5. Composition selon la revendication 4, caractérisée en ce que le bisphénol est le bisphénol A.

6. Composition selon l'une des revendications précédentes, caractérisée en ce que le polyester a été préparé par transestérification.

7. Composition selon la revendication 6, caractérisée en ce que le polyester a été préparé par une réaction de transestérification entre le bisphénol et un diester de l'acide dicarboxylique et un composé monohydroxyphénolique de la série du benzène ou du naphtalène de 6 à 20 atomes de carbone.

8. Composition selon l'une des revendications précédentes, caractérisée en ce que ledit polymère MBS et ledit polyester sont pour l'essentiel les seuls ingrédients polymères.

9. Composition selon la revendication 8, caractérisée en ce que le polymère MBS consiste en méthacrylate de méthyle, butadiène 1,3 et styrène comme composants monomères.

10. Composition selon la revendication 8, caractérisée en ce que le polymère MBS contient aussi un composant monomère d'acrylonitrile.

11. Composition selon l'une des revendications précédentes, caractérisée en ce qu'un polymère MBS est présent à raison de 1 à 99 parties en poids pour 100 parties en poids du mélange du polyester et du polymère MBS.

12. Composition selon la revendication 11, caractérisée en ce que le polymère MBS est présent à raison de moins de 50% en poids sur la base du poids combiné du polyester et du polymère MBS.

13. Composition selon la revendication 11, dans laquelle le polymère MBS est présent à raison de 5 à 30 parties pour 100 parties en poids du mélange.

14. Composition selon l'une des revendications 1 à 7, caractérisée en ce que ledit polymère SAN et ledit polyester sont pour l'essentiel les seuls ingrédients polymères.

15. Composition selon la revendication 14, caractérisée en ce que le polymère SAN consiste en résidus monomères de styrène et d'acrylonitrile.

16. Composition selon la revendication 14 ou 15, caractérisée en ce que le polymère SAN est présent à raison de 1 à 99 parties en poids pour 100 parties en poids du mélange du polyester et du polymère SAN.

17. Composition selon la revendication 16, caractérisée en ce que le polymère SAN est présent à raison de moins de 50% en poids sur la base du poids combiné du mélange de polyester et de polymère SAN.

18. Composition selon la revendication 17, caractérisée en ce que le polymère SAN est présent à raison de 1 à 30 parties pour 100 parties en poids du mélange.

19. Composition selon la revendication 17, caractérisée en ce que le polymère SAN est présent à raison de 1 à 15 parties pour 100 parties en poids du mélange.

20. Composition selon l'une des revendications précédentes, caractérisée en ce qu'elle comprend également un matériau de remplissage.

21. Composition selon la revendication 20, caractérisée en ce que ledit matériau de remplissage est du verre particulaire.

22. Composition selon la revendication 21, caractérisée en ce que le matériau de remplissage est de la fibre de verre présente à raison de 5 à 70% en poids sur la base du poids combiné de (a) et (b).

23. Composition selon la revendication 22, caractérisée en ce que la fibre de verre contient un agent de couplage organique.

24. Composition selon la revendication 23, caractérisée en ce que ledit agent de couplage organique est un silane.

25. Objet façonné formé à partir d'une composition telle que revendiquée dans l'une des revendications précédentes.